(19) Europäisches Patentamt
European Patent Office
Office européen des brevets

(11) **EP 2 221 100 A1**

(12) **EUROPEAN PATENT APPLICATION**
published in accordance with Art. 153(4) EPC

(43) Date of publication:
**25.08.2010 Bulletin 2010/34**

(51) Int Cl.:
**B01D 46/52** (2006.01)

(21) Application number: **08850406.3**

(22) Date of filing: **12.11.2008**

(86) International application number:
**PCT/JP2008/070615**

(87) International publication number:
**WO 2009/063920 (22.05.2009 Gazette 2009/21)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **16.11.2007 JP 2007298672**

(71) Applicant: **Nitto Denko Corporation
Ibaraki-shi, Osaka 567-8680 (JP)**

(72) Inventors:
• **KAWANO, Eizo
Ibaraki-shi
Osaka 567-8680 (JP)**
• **YANO, Youzou
Ibaraki-shi
Osaka 567-8680 (JP)**
• **SUZUKI, Akio
Ibaraki-shi
Osaka 567-8680 (JP)**

(74) Representative: **Intes, Didier Gérard André et al
Cabinet Beau de Loménie
158, rue de l'Université
75340 Paris Cedex 07 (FR)**

(54) **FILTER UNIT, FILTER UNIT PANEL USING THE SAME, AND METHOD OF MANUFACTURING FILTER UNIT**

(57)     Provided is a filter unit in which an increase in pressure loss is suppressed despite the use of an injection-molded resin as a frame. This filter unit includes a pleated filter medium (1) and a frame (2) for supporting the filter medium (1). The frame (2) has inner and outer peripheries, each of which is rectangular in shape when viewed along an air flow path through the filter medium (1). In this filter unit, the filter medium (1) is fixed to the frame (2) with a peripheral portion of the filter medium (1) being embedded inside the frame (2). The pleated filter medium (1) has a value D/P of 0.25 or less. This value D/P is obtained by dividing the distance D between adjacent ridges of the pleats of the filter medium (1) by the height P of the pleats.

The distance D has a minimum value d of at least 1 mm. The frame (2) has a length La longer than a length Lm. The length La is a length of the frame (2) measured in the direction in which the ridges of the filter medium (1) are arranged, and the length Lm is a maximum length of the frame (2) measured in the direction in which the ridges of the filter medium (1) extend. The frame (2) is a resin member containing 5 to 30% by weight of glass fiber. The frame (2) can be formed by injection molding.

FIG. 1

EP 2 221 100 A1

**Description**

TECHNICAL FIELD

The present invention relates to filter units and filter unit panels, for example, used in air inlets of clean rooms, air conditioning equipment, gas turbines, and steam turbines.

BACKGROUND ART

An air filter is provided in each inlet of, for example, clean rooms, air conditioning equipment, gas turbines, and steam turbines. An air filter suitable for these purposes is a filter unit panel in which a plurality of filter units, each having a filter medium and a frame for supporting it, are joined together with their outer peripheral surfaces being in contact with each other. JP 2005-177641 A discloses an example of such a filter unit.

The filter unit disclosed in JP 2005-177641 A includes a filter medium and a frame (supporting frame), and the frame is formed by injection molding of a resin. During the injection molding, the filter medium can be fixed to the frame simultaneously with the formation of the frame. JP 2005-177641 A describes, in paragraph 0026, that the frame may contain an additive such as a pigment, an antibacterial agent, or a carbon fiber.

When the frame is formed by injection molding of a resin, the frame is deformed due to the shrinkage of the resin, and the filter medium is deformed accordingly. When the filter medium is deformed significantly, adjacent ridges of the pleats of the filter medium are brought close excessively to each other, which increases the pressure loss of the filter medium. A smaller ratio of the distance between the ridges to the height of the pleats is more suitable for a larger filtration area. A deeply-folded filter medium for reducing this ratio, however, is susceptible to a significant increase in pressure loss due to the deformation of the frame.

DISCLOSURE OF THE INVENTION

Accordingly, it is an object of the present invention to provide a filter unit in which an increase in pressure loss is suppressed despite the use of an injection-molded resin as a frame, and a filter unit panel using the filter unit.

The present invention provides a filter unit including: a pleated filter medium; and a frame for supporting the filter medium. The frame has inner and outer peripheries, each of which is rectangular in shape when viewed along an air flow path through the filter medium. In this filter unit, the filter medium is fixed to the frame with a peripheral portion of the filter medium being embedded in an inner peripheral surface of the frame. The pleated filter medium has a value $D/P$ of 0.25 or less. This value $D/P$ is obtained by dividing a distance $D$ between adjacent ridges of the pleats of the filter medium by a height $P$ of the pleats, and the distance $D$ has a minimum value $d$ of at least 1 mm. The frame is a resin member containing 5 to 30% by weight of glass fiber. The frame has a length $La$ longer than a length $Lm$. The length $La$ is a length of the frame measured in a direction in which the ridges of the filter medium are arranged, and the length $Lm$ is a maximum length of the frame measured in a direction in which the ridges of the filter medium extend.

In another aspect, the present invention provides a method of manufacturing a filter unit including a pleated filter medium and a frame for supporting the filter medium. The frame has inner and outer peripheries, each of which is rectangular in shape when viewed along an air flow path through the filter medium. This method includes the step of setting the pleated filter medium in an injection molding machine so that the filter medium has a value $D/P$ of 0.25 or less and a peripheral portion of the filter medium is exposed to a resin injection space in the injection molding machine. The value $D/P$ is obtained by dividing a distance $D$ between adjacent ridges of the pleats of the filter medium by a height $P$ of the ridges. The method also includes the step of forming the frame that is a resin member made of a resin containing 5 to 30% by weight of glass fiber by injecting the resin into the resin injection space and thereby embedding the peripheral portion of the filter medium in the frame to fix the filter medium to the frame. The frame has a length $La$ longer than a length $Lm$. The length $La$ is a length of the frame measured in a direction in which the ridges of the filter medium are arranged, and the length $Lm$ is a maximum length of the frame measured in a direction in which the ridges of the filter medium extend.

The present invention further provides a filter unit panel including a plurality of the filter units of the present invention, integrated into a single unit with the outer peripheral surfaces of the frames thereof being in contact with each other.

According to the present invention, since the resin containing 5 to 30% by weight of glass fiber is injection-molded to form the frame, the frame resists deformation. Further, in the present invention, since the frame is formed so that the length $La$ of the frame becomes longer than the length $Lm$ thereof, the deformation of the filter medium, which may cause an increase in the pressure loss, is reduced, as described later in Examples. Accordingly, even in a filter medium having such sharp-ridged pleats that the value $D/P$ obtained by dividing the distance $D$ between adjacent ridges by the height $P$ of the pleats is 0.25 or less, the increase in the pressure loss can be suppressed. According to the present invention, it is possible to suppress the increase in the pressure loss of the filter unit, while taking advantage of the simplification of the manufacturing processes of the filter unit by injection molding.

BRIEF DESCRIPTION OF THE DRAWINGS

FIG. 1 is a perspective view of one embodiment of a filter unit according to the present invention.
FIG. 2 is a perspective view of one embodiment of a filter unit panel according to the present invention.
FIG. 3 is a cross-sectional view illustrating an example of a filter medium.
FIG. 4 illustrates plan views of an example of a filter medium, and FIG. 4 (a) illustrates a state in which the filter medium is hardly deformed, and FIG. 4 (b) illustrates a state in which the filter medium is deformed significantly.

BEST MODE FOR CARRYING OUT THE INVENTION

Hereinafter, an embodiment of the present invention will be described as an example with reference to the accompanying drawings.

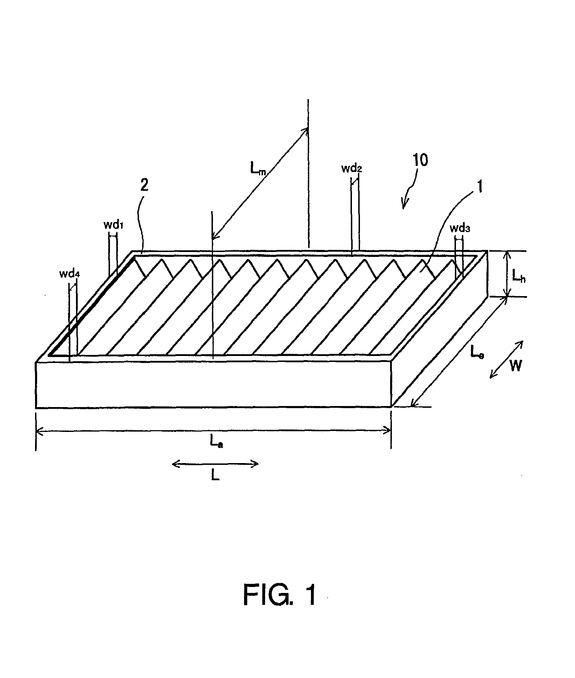

As shown in FIG. 1, a filter unit 10 includes a filter medium 1 and a frame 2, and the peripheral portion of the filter medium 1 is supported by the frame 2. The filter medium 1 is pleated (accordion-folded) to increase the filtration area and reduce the pressure loss. The filter medium 1 is rectangular in shape when viewed in plan (along the air flow path through the filter medium). The frame 2 has a shape of a rectangular picture frame having inner and outer peripheries, each of which is rectangular in shape in plan view, and the filter medium 1 is supported by the inner periphery of the frame 2.

The frame 2 is a resin member that has been injection-molded so that the peripheral portion of the filter medium 1 is fixed to the frame 2. The injection molding allows the formation of the frame 2 and the fixing of the filter medium 1 to the frame 2 to be performed simultaneously, and thereby simplifies the manufacturing processes. The peripheral portion of the filter medium 1 is embedded inside (in the inner peripheral surface of) the injection-molded frame 2, and the resin has penetrated into the peripheral portion of the filter medium 1.

The frame 2 is a resin member containing 5 to 30% by weight of glass fiber. The glass fiber prevents the shrinkage of the injection-molded resin. When the content of glass fiber in the resin member exceeds 30% by weight, the resulting molded article becomes brittle and the components of the molding machine are worn severely. On the other hand, when the content of the glass fiber in the resin member is less than 5% by weight, the shrinkage of the resin cannot be prevented sufficiently. The content of the glass fiber in the resin member preferably is 10 to 30% by weight. Carbon fiber also is known as a fibrous additive. Glass fiber is, however, much more preferable than carbon fiber from the viewpoint of suppression of coloring and cost effectiveness (i.e., prevention of deformation of the frame).

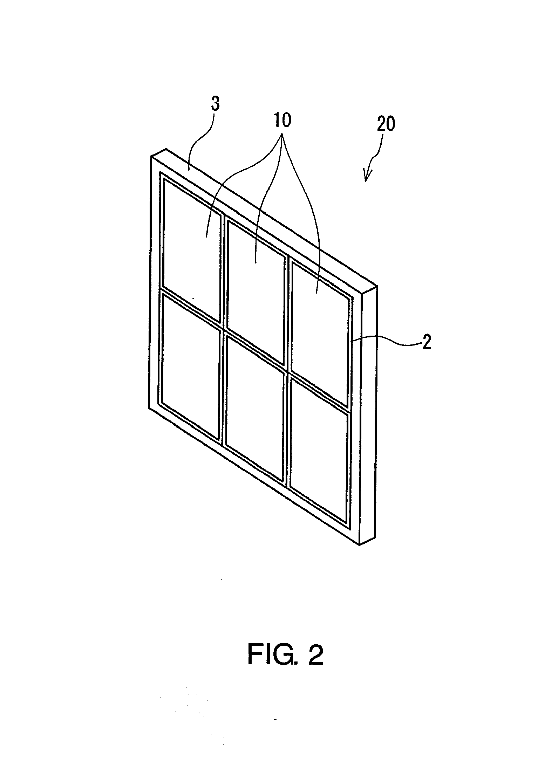

A plurality of the filter units 10 may be used as a single panel. A filter unit panel 20 shown in FIG. 2 includes a plurality of the filter units 10 and an outer frame 3. The filter units 10 are integrated into a single unit, with the outer peripheral surfaces of the frames 2 being in contact with each other, and the outer frame 3 surrounds the outer periphery of the integrated filter units. The outer frame 3 protects the filter units, increases the strength of the entire panel, and facilitates installing the filter unit panel. The filter units 10 may be integrated, for example, by welding the adjacent frames 2 together. The integrated filter units 10 also can be integrated with the outer frame 3 by welding. The type of welding is not particularly limited. Ultrasonic welding, heat welding, laser welding, or the like may be used.

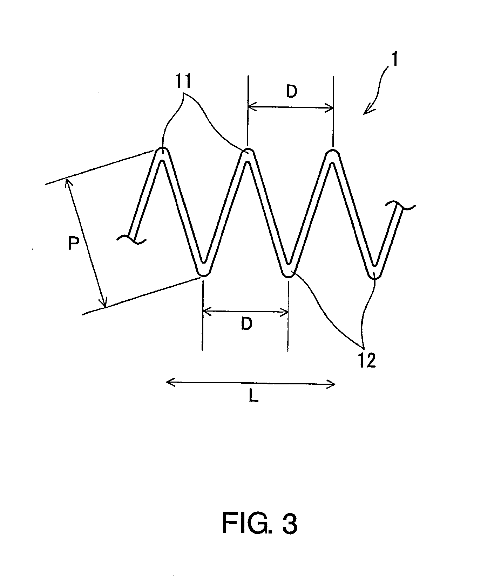

As shown in FIG. 3, the filter medium 1 has a pleated form with mountain-folded ridges 11 and valley-folded ridges 12 (which also may be referred to as valleys but are treated as ridges herein) being formed alternately. The pleats are formed so that the distances P between the ridges 11 and the next ridges 12 (heights of the pleats) are all equal. The distances D between adjacent ridges of the filter medium 1 have a constant value when the length of the filter medium 1 in the direction L is determined (in other words, when the filter medium 1 is fixed to the frame 2). The direction L is a direction in which the filter medium 1 extends in the shape of a series of Ws (i.e., a direction in which the ridges are arranged).

A smaller value D/P is better to reduce the pressure loss while securing a sufficient filtration area for the filter medium 1. The value D/P preferably is 0.25 or less, and particularly preferably 0.15 or less. On the other hand, an excessively small value D/P may increase the pressure loss of the filter medium 1. An excessively small value D/P also may deteriorate the durability of a mold used for injection molding. Therefore, the value D/P preferably is at least 0.05. It should be noted that the value D/P is calculated using, as the distance D, the average value of the distances between all pairs of adjacent ridges 11 and the average value of the distances of all pairs of adjacent ridges 12.

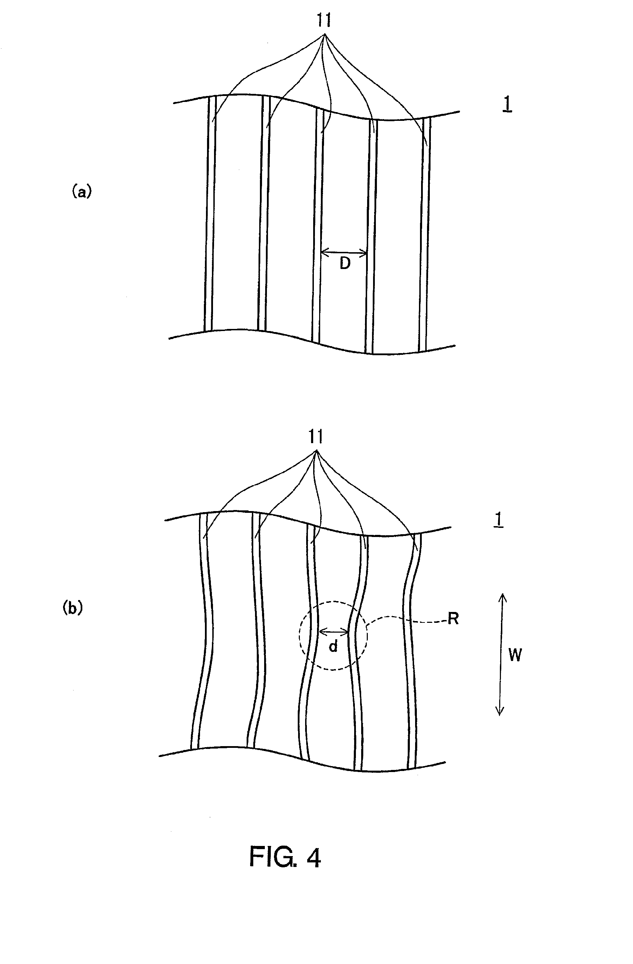

As shown in FIG. 4 (a), the filter medium 1 is pleated so that the ridges 11 extend straight in parallel to each other, and the resin is injection-molded around the peripheral portion of the filter medium 1. In this state, the distances D between the adjacent ridges 11 are all almost equal. When the injection-molded resin shrinks, however, the filter medium 1 is deformed, and thereby the ridges 11 are curved partially. As shown in FIG. 4 (b), the ridge 11 is "curved" significantly when the frame shrinks in the direction W in which the ridges 11 extend and the stress is applied to the filter medium 1 along the direction W. When the ridge 11 is "curved", the distance between the ridges 11 becomes smaller in a region R. This region R increases the resistance of the filter medium to air flow and thereby increases the pressure loss of the filter medium. Therefore, it is desired that the filter unit 10 be designed so that the shrinkage of the frame 2 in the extension direction W of the ridges 11 can be smaller than the shrinkage thereof in the arrangement direction L of the ridges 11. For example, the filter unit 10 is designed so that the length La of the frame 2 in the arrangement direction L of the ridges 11 of the filter medium 1 becomes larger than the maximum length Lm of the frame 2 in the extension direction W of the ridges 11 of the filter medium 1. It should be noted that as the length La, a value obtained by measuring the end portion of the frame 2 is used for convenience.

In order to prevent the pressure loss from increasing, the minimum distance d (i.e., the minimum value of the distance D) in the filter medium 1 is at least 1 mm. The distance d preferably is at least 2 mm, and particularly preferably at least 3 mm.

In order to obtain a value of the distance d in the above range, it is preferable that the shape of the frame 2 is maintained as designed in the extension direction W of the ridges 11. The preferable dimensions of the frame 2 are described again with reference to FIG. 1. When the length of the frame 2 is measured in the extension direction W of the ridges of the filter medium, a ratio $\{(Lm - Le)/Lm\} \times 100[\%]$ preferably is 0.5% or less, and particularly preferably 0.3% or less. The ratio is calculated from the maximum length Lm of the frame and the length Le of the end portion of the frame. The above ratio indicates a shrinkage factor of the frame 2. The frame 2 formed by injection molding tends to bulge outwardly in the center portion thereof and recedes inwardly in the end portions thereof, and therefore the center portion has the maximum length Lm.

Preferably, the height (depth) Lh of the panel is less than 50 mm from the viewpoint of space saving.

Preferably, the pressure loss and the particle collection efficiency of the filter unit panel are 250 Pa or less and 95% or more, and particularly preferably 150 Pa or less and 99% or more, respectively, when expressed as values measured by a method to be described later. In this regard, however, the values indicating the characteristics of the filter unit panel of the present invention are not limited to the above-mentioned ones because the required pressure loss and particle collection efficiency vary depending on the intended use.

The type of the filter medium 1 is not particularly limited. A laminated body of a porous polytetrafluoroethylene (PTFE) membrane and an air-permeable fibrous layer is preferred. Although an electret filter medium has a low pressure loss, it does not exhibit such a high collection efficiency as a HEPA-grade filter medium, and its collection efficiency decreases when it is washed. When a glass fiber layer is used as a filter medium, the pressure loss increases. When the height P of the pleats is increased to compensate for the increase in the pressure loss, the frame has a greater height and thereby has a larger size, which increases the weight of the air filter accordingly.

The air-permeable fibrous layer may be, for example, felt, nonwoven fabric, woven fabric, and meshes (network sheet). Examples of the material of this layer include polyolefins (such as polyethylene (PE) and polypropylene), polyamides (including aromatic polyamide), and polyesters (such as polyethylene terephthalate (PET)). Preferably, the air-permeable fibrous layer is a nonwoven fabric formed of a fiber having a core-sheath structure in which the core component is made of a higher melting point material than the material of the sheath component.

Examples of the resin constituting the frame 2 and the outer frame 3 include polyolefin resins, polyamide resins (including aromatic polyamide resin), polyurethane resins, polyester resins, polystyrene resins (such as ABS resin), and polycarbonate resins. Two or more of these resins may be used in combination, or different types of resins may be used for the frame and the outer frame.

The shrinkage factor of the glass fiber-containing resin constituting the frame 2 preferably is 10/1000 or lower, and particularly preferably 5/1000 or lower. In the present description, the shrinkage factor of the resin means a molding shrinkage factor ($S_{Mn}$) measured in the direction perpendicular to the flow direction according to JIS K7152-4.

Hereinafter, the present invention is described further in detail with reference to Examples. First, a method of measuring the collection efficiency is described.

[Collection Efficiency]

The rate of air flow through each sample filter unit panel was adjusted to 0.5 m/sec, and polydisperse dioctyl phthalate (DOP) particles were allowed to flow from the upstream side of the sample at a concentration of $10^7$ particles per liter. The concentration of the DOP particles on the upstream side of the sample and the concentration of the particles that have passed through the sample to the downstream side thereof were measured with a particle counter. Thus, the collection efficiency of each sample was obtained according to the following equation. The DOP particles with diameters of 0.3 to 0.4 $\mu$m were used.

$$\text{Collection efficiency (\%)} = [1 - (\text{Concentration on downstream side} / \text{Concentration on upstream side})] \times 100$$

[Pressure loss]

A pressure loss was measured with a pressure gauge (manometer) when the rate of air flow through each sample filter unit panel was adjusted to 0.5 m/sec.

(Example 1)

A porous PTFE membrane was placed between two sheets of nonwoven fabric so as to be overlapped. Then, the resulting sheet was passed through a pair of rolls heated at 180°C and thereby thermal lamination was carried out. Thus, a filter medium with a thickness of 0.32 mm, a pressure loss of 170 Pa, and a collection efficiency of 99.99% was obtained. A PET/PE core-sheath type nonwoven fabric with a weight per unit area of $30g/m^2$ ("Eleves T03030WDO" manufactured by UNITIKA, LTD.) was used.

The porous PTFE membrane was prepared in the following manner. 100 parts by weight of PTFE fine powder (F-104, manufactured by Daikin Industries, Ltd.) and 20 parts by weight of a liquid lubricant (dodecane) were mixed uniformly, and the resulting mixture was preformed. Next, the preformed body was formed into a rod by paste extrusion, followed by rolling the rod thus formed with a pair of metal rolls. Thus, a continuous sheet having a thickness of 200 $\mu$m was obtained. This continuous sheet was stretched by a factor of 10 in the longitudinal direction thereof at a stretching temperature of 200°C. Then, the resulting sheet further was stretched by a factor of 20 in the width direction thereof at a stretching temperature of 80°C by a tenter method. Thus, an unsintered porous PTFE membrane was obtained. This unsintered porous PTFE membrane was sintered in a hot air furnace at 400°C, and thereby a long strip of porous PTFE membrane (with a thickness of 10 $\mu$m) was obtained.

The filter medium obtained in the manner described above was pleated so that 93 pleats having a height (P) of 22 mm were formed therein. The pleated filter medium was set in a mold of an injection molding machine, and a polycarbonate resin containing 30% by weight of glass fiber was injection-molded into a frame with a thickness ($wd_1$, $wd_2$, $wd_3$, and $wd_4$) of 3 mm. Thus, a filter unit having outer dimensions of 195 mm (Lm) $\times$ 295 mm (La) with a height of 27 mm (Lh) was obtained. The thickness of the frame of the filter unit is thus uniform around the entire periphery of the filter medium (i.e., $wd_1 = wd_2 = wd_3 = wd_4$). As the polycarbonate resin containing 30% by weight of glass fiber, "IUPILON" manufactured by Mitsubishi Engineering-Plastics Corporation was used. The shrinkage factor of the polycarbonate resin was 3.5/1000.

Next, six filter units were placed with the outer peripheral surfaces of the frames being in contact with each other and integrated into a single unit by heat welding. Thus, a filter unit panel was obtained. Further, four polycarbonate resin bars, which have been produced previously by extrusion molding, were disposed on the outer peripheral surface of the filter unit panel, and the filter unit panel and the bars were heat-welded. Thus, a filter unit panel with an outer frame (i.e., an air filter) having outer dimensions of 610 mm $\times$ 610 mm with a height of 27 mm was obtained. For the above-mentioned heat weldings, protrusions formed on the upper and lower faces of the frames and the outer frame were used as welding ribs.

(Example 2)

An air filter was obtained in the same manner as in Example 1, except that the content of glass fiber in the polycarbonate resin used for injection molding was changed to 10% by weight. The shrinkage factor of the polycarbonate resin containing 10% by weight of glass fiber was 5/1000.

(Comparative Example 1)

An air filter was obtained in the same manner as in Example 1, except that the polycarbonate resin containing no glass fiber was subjected to injection molding.

(Comparative Example 2)

A commercially available air filter including a glass fiber layer as a filter medium was prepared.

(Comparative Example 3)

An air filter was obtained in the same manner as in Example 1, except that filter units each having outer dimensions of 295 mm (Lm) × 195 mm (La) with a height of 27 mm (Lh) were formed.

Table 1 below shows the characteristics (pressure losses and particle collection efficiencies) of the air filters obtained in Examples and Comparative Examples. Table 1 also shows the outer dimensions and weights of the air filters, the values D/P, the values d, and the actually measured values of ratios (Lm - Le)/Lm of the filter media, and the values La/Lm obtained from the lengths of the frames of the filter units used for forming the air filters. It should be noted that the values D/P, the values d, and the ratios {(Lm - Le)/Lm} × 100 (shrinkage factors of the frames) were obtained by calculating the average values of those of the six filter units. In Examples and Comparative Examples, the length La, the length Lm, and the thicknesses $wd_1$, $wd_2$, $wd_3$ and $wd_4$ of the frame of each filter unit were almost unchanged after the heat welding for forming the air filter.

[Table 1]

| | Outer dimensions [mm] | Weight [kg] | D/P | d [mm] | Frame shrinkage factor [%] | La/Lm | Pressure loss [Pa] | Collection efficiency [%] |
|---|---|---|---|---|---|---|---|---|
| Example 1 | 610 × 610 × 27 | 1.9 | 0.14 | 2.7 | 0.1 | 1.51 | 119 | 99.995 |
| Example 2 | 610 × 610 × 27 | 1.9 | 0.14 | 2.8 | 0.1 | 1.51 | 115 | 99.999 |
| Comparative Example 1 | 610 × 610 × 27 | 1.9 | 0.14 | 0.5 | 0.7 | 1.51 | 137 | 99.995 |
| Comparative Example 2 | 610 × 610 × 50 | 3.5 | 0.1 | 5.0 | - | - | 147 | 99.990 |
| Comparative Example 3 | 610 × 610 × 27 | 1.9 | 0.14 | 0.7 | 0.1 | 0.66 | 125 | 99.997 |

In the air filter of Comparative Example 1, the filter medium was deformed partially near the frame due to the shrinkage of the resin. Thereby, in the deformed region, adjacent ridges were brought very close to each other with a smaller distance therebetween. Presumably, such a deformation of the filter medium increased the pressure loss.

Also in the air filter of Comparative Example 3, the filter medium was deformed partially near the frame, and thereby, the distance between adjacent ridges became smaller in the deformed region. In the filter unit of Comparative Example 3, the length of the frame in the direction in which the ridges of the filter medium extend was longer than the length of the frame in the direction in which the ridges of the filter medium are arranged. Presumably, this is the reason why the filter medium was deformed and thereby the pressure loss was increased, even though the shrinkage factor of the frame was as small as the frames of Examples.

A comparison between Example 1 and Example 2 shows that the difference in the content of glass fiber between 10% and 30% has little influence on the effect of suppressing the increase in the pressure loss. In view of this, the content of glass fiber may be, for example, 10 to 20%.

The filter unit panel composed of the filter units of the present invention is suitable for air filters used in inlets of, for example, clean rooms, air conditioning equipments, gas turbines, and steam turbines.

**Claims**

1. A filter unit comprising:

   a pleated filter medium; and
   a frame for supporting the filter medium, the frame having inner and outer peripheries, each of which is rectangular in shape when viewed along an air flow path through the filter medium,
   wherein the filter medium is fixed to the frame with a peripheral portion of the filter medium being embedded in an inner peripheral surface of the frame,
the pleated filter medium has a value D/P of 0.25 or less, the value D/P being obtained by dividing a distance D between adjacent ridges of the pleats of the filter medium by a height P of the pleats, and the distance D having a minimum value d of at least 1 mm,
the frame is a resin member containing 5 to 30% by weight of glass fiber, and
the frame has a length La longer than a length Lm, the length La being a length of the frame measured in a direction in which the ridges of the filter medium are arranged, and the length Lm being a maximum length of the frame measured in a direction in which the ridges of the filter medium extend.

2. The filter unit according to claim 1, wherein the frame has a ratio $\{(Lm - Le)/Lm\} \times 100[\%]$ of 0.5% or less when the length of the frame is measured in the direction in which the ridges of the filter medium extend, the ratio being calculated from the maximum length Lm of the frame and a length Le of the end portion of the frame.

3. The filter unit according to claim 1, wherein the filter medium is a laminated body including a porous polytetrafluoroethylene membrane and an air-permeable fibrous layer.

4. A filter unit panel comprising a plurality of the filter units according to claim 1, integrated into a single unit with the outer peripheral surfaces of the frames thereof being in contact with each other.

5. A method of manufacturing a filter unit including: a pleated filter medium; and a frame for supporting the filter medium, the frame having inner and outer peripheries, each of which is rectangular in shape when viewed along an air flow path through the filter medium, the method comprising the steps of:

setting the pleated filter medium in an injection molding machine so that the filter medium has a value D/P of 0.25 or less and a peripheral portion of the filter medium is exposed to a resin injection space in the injection molding machine, the value D/P being obtained by dividing a distance D between adjacent ridges of the pleats of the filter medium by a height P of the ridges; and
forming the frame that is a resin member made of a resin containing 5 to 30% by weight of glass fiber by injecting the resin into the resin injection space and thereby embedding the peripheral portion of the filter medium in the frame to fix the filter medium to the frame so that the frame has a length La longer than a length Lm, the length La being a length of the frame measured in a direction in which the ridges of the filter medium are arranged, and the length Lm being a maximum length of the frame measured in a direction in which the ridges of the filter medium extend.

FIG. 1

FIG. 2

FIG. 3

(a)

11

D

1

(b)

11

d

R

W

1

FIG. 4

**INTERNATIONAL SEARCH REPORT**

International application No.

PCT/JP2008/070615

A.   CLASSIFICATION OF SUBJECT MATTER
*B01D46/52*(2006.01)i

According to International Patent Classification (IPC) or to both national classification and IPC

B.   FIELDS SEARCHED

Minimum documentation searched (classification system followed by classification symbols)
B01D46/00-46/54, B01D39/00-39/20

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2002-219320 A (Toyobo Co., Ltd.), 06 August, 2002 (06.08.02), Par. No. [0019]; Fig. 1 (Family: none) | 1-5 |
| Y | JP 2003-88718 A (Japan Vilene Co., Ltd.), 25 March, 2003 (25.03.03), Par. No. [0002] (Family: none) | 1-5 |
| Y | JP 11-128644 A (Toshio AWAJI), 18 May, 1999 (18.05.99), Par. No. [0048] & TW 396053 B | 1-5 |

☒   Further documents are listed in the continuation of Box C.   ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 January, 2009 (29.01.09) | 10 February, 2009 (10.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/070615 |

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 60150/1984(Laid-open No. 39321/1985)<br>(Nitta Corp.),<br>19 March, 1985 (19.03.85),<br>Page 4, lines 3 to 16<br>(Family: none) | 1-5 |
| Y | JP 2003-287387 A (Matsushita Ecology Systems Co., Ltd.),<br>10 October, 2003 (10.10.03),<br>Par. No. [0050]<br>(Family: none) | 1-5 |
| Y | JP 2005-177641 A (Nitto Denko Corp.),<br>07 July, 2005 (07.07.05),<br>Par. No. [0035]; Fig. 2<br>(Family: none) | 3,4 |
| A | JP 1-199620 A (Taiko Co., Ltd.),<br>11 August, 1989 (11.08.89),<br>Full text; all drawings<br>(Family: none) | 1-5 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005177641 A